# EUROPEAN PATENT APPLICATION

(11) **EP 4 122 564 A1**
(43) Date of publication of application: **25.01.2023**
(21) Application number: 22183350.2
(22) Date of filing: 06.07.2022
(51) Int. Cl.: A63F 13/211, A63F 13/212, A63F 13/213, A63F 13/23, A63F 13/22, A63F 13/428, A63F 13/816, A63F 13/56, A63B 24/00

(54) **EXERCISE OR SPORTS EQUIPMENT AS GAME CONTROLLER**

(30) Priority: 20.07.2021 US 202163223821 P; 20.08.2021 US 202117407393
(71) Applicant: Sony Interactive Entertainment LLC, San Mateo, CA 94404 (US)
(72) Inventor: GOULD, Lee, California, 94404 (US); AZMANDIAN, Mahdi, California, 94404 (US)
(74) Representative: D Young & Co LLP

(57) **Abstract**

A system and method for providing real-time exercise parameters generated from exercise and sports equipment by a user into gameplay of game titles. The real-time exercise parameters may include power data, resistance data, cadence data, speed data, etc. and associated timestamps, such that the exercise parameters may be used for generating instructions corresponding to a set of inputs associated with gameplay of a game title. A game server associated with the game title may receive and execute the instructions to initiate performance of an in-game action by an avatar of the user within a gaming environment of the game title.

## Description

### CROSS-REFERENCE TO RELATED APPLICATION

This application claims the priority benefit of U.S. provisional patent application 63/223,821 filed July 20, 2021, which is incorporated by reference herein in its entirety.

### BACKGROUND OF THE INVENTION

### 1. Field of the Invention

The present technology pertains to using exercise or sports equipment as game controllers for interactive content titles. More specifically, the present technology pertains to utilizing parameters of real-world exercise as inputs for gameplay of interactive content titles.

### 2. Description of the Related Art

A variety of traditional digital games are played in sedentary positions. While fine motor skills may be used during gameplay, such traditional digital games generally do not involve any cardiovascular activity or other forms of physical exercise. Some digital game titles have started incorporating physical movements into game requirements. Digital game titles involving dancing, for example, may require the player to perform dance movements, thereby inherently involving physical exercise and exertion resulting from the dance movements. Other digital game-particularly those involving virtual reality-may incorporate full body movements into a game. While incorporating some physical activity, however, such games are generally not geared towards promoting health and wellness and otherwise do not consider health or wellness metrics in evaluating gameplay. Thus, while players may engage in some level of physical activity, such activity is not evaluated or assessed-and therefore not promoted-in accordance with health and wellness goals (e.g., as measured and defined by biometrics).

Conversely, many existing exercise or sports equipment (and associated content) may not as interactive or provide as much variation in content as interactive content titles. For example, while individuals may vary exercise parameters (*e.g*., speed, resistance) and/or listen to different music while exercising, the traditional exercise experience may not be as social, interactive, or provide as much variety in intellectual or imaginative challenges as do gameplay of digital games in immersive game environments.

There is therefore a need in the art for improved systems and methods for utilizing real-time motion data in exercise or sports equipment as inputs for gameplay of game titles.

### SUMMARY OF THE CLAIMED INVENTION

Disclosed are systems, apparatuses, methods, computer readable medium, and circuits for incorporating real-time exercise parameters generated from exercise and sports equipment into gameplay of a game title. According to at least one example, a method includes receiving exercise parameters in real-time over a communication network. The exercise parameters may be produced at an exercise equipment during use by a user that is engaged in gameplay of a game title. The method may further include mapping the real-time exercise parameters to a set of inputs associated with gameplay of the game title. In addition, the method may include generating instructions corresponding to the set of inputs based on the mapping. The set of inputs may be associated with performing an in-game action in a gaming environment of the game title. The method may include providing the instructions to a game server associated with the game title. The game server may execute the instructions to initiate performance of the in-game action by an avatar of the user within the gaming environment of the game title.

For example, a motion server of a network environment may receive exercise parameters in real-time over a communication network. The exercise parameters may be produced at an exercise equipment during use by a user that is engaged in gameplay of a game title. The motion server may map the real-time exercise parameters to a set of inputs associated with gameplay of the game title. The motion server may generate instructions corresponding to the set of inputs based on the mapping, wherein the set of inputs is associated with performing an in-game action in a gaming environment of the game title. The motion server may provide the instructions to a game server associated with the game title, wherein the game server may execute the instructions to initiate performance of the in-game action by an avatar of the user within the gaming environment of the game title.

In another example, the motion server of the network environment may incorporate real-time exercise parameters generated from exercise and sports equipment into gameplay of a game title is provided that includes a storage (*e.g*., a memory configured to store data, such as virtual content data, one or more images, etc.) and one or more processors (*e.g*., implemented in circuitry) coupled to the memory and configured to execute instructions and, in conjunction with various components (*e.g*., a network interface, a display, an output device, etc.), cause the motion server of the network environment to receive exercise parameters in real-time over a communication network. The exercise parameters may be produced at an exercise equipment during use by a user that is engaged in gameplay of a game title. The motion server may map the real-time exercise parameters to a set of inputs associated with gameplay of the game title. The motion server may generate instructions corresponding to the set of inputs based on the mapping, wherein the set of inputs is associated with performing an in-game action in a gaming environment of the game title. The motion server may further provide the instructions to a game server associated with the game title, wherein the game server executes the instructions to initiate performance of the in-game action by an avatar of the user within the gaming environment of the game title.

### BRIEF DESCRIPTION OF THE DRAWINGS

FIG. 1 illustrates an exemplary network environment in which systems for utilizing parameters of real-world exercise as inputs for gameplay of interactive content titles may be implemented.
FIG. 2 is a block diagram of an exemplary system for utilizing parameters of real-world exercise as inputs for gameplay of interactive content titles.
FIG. 3 is an exemplary table of various objects and associated virtual events.
FIG. 4 illustrates a flowchart of an exemplary method for utilizing parameters of real-world exercise as inputs for gameplay of interactive content titles.
FIG. 5 illustrates an example electronic entertainment system that integrates an exercise or sports equipment that provides inputs for gameplay, according to an aspect of the present disclosure.

### DETAILED DESCRIPTION

The detailed description set forth below is intended as a description of various configurations of the subject technology and is not intended to represent the only configurations in which the technology can be practiced. The appended drawings are incorporated herein and constitute a part of the detailed description. The detailed description includes specific details for the purpose of providing a more thorough understanding of the technology. However, it will be clear and apparent that the technology is not limited to the specific details set forth herein and may be practiced without these details. In some instances, structures and components are shown in block diagram form in order to avoid obscuring the concepts of the subject technology.

Aspects of the present disclosure include systems and methods for providing real-time exercise parameters generated from exercise and sports equipment by a user into gameplay of game titles. The real-time exercise parameters may include power data, resistance data, cadence data, speed data, etc. and associated timestamps, such that the exercise parameters may be used for generating instructions corresponding to a set of inputs associated with gameplay of a game title. A game server associated with the game title may receive and execute the instructions to initiate performance of an in-game action by an avatar of the user within a gaming environment of the game title.

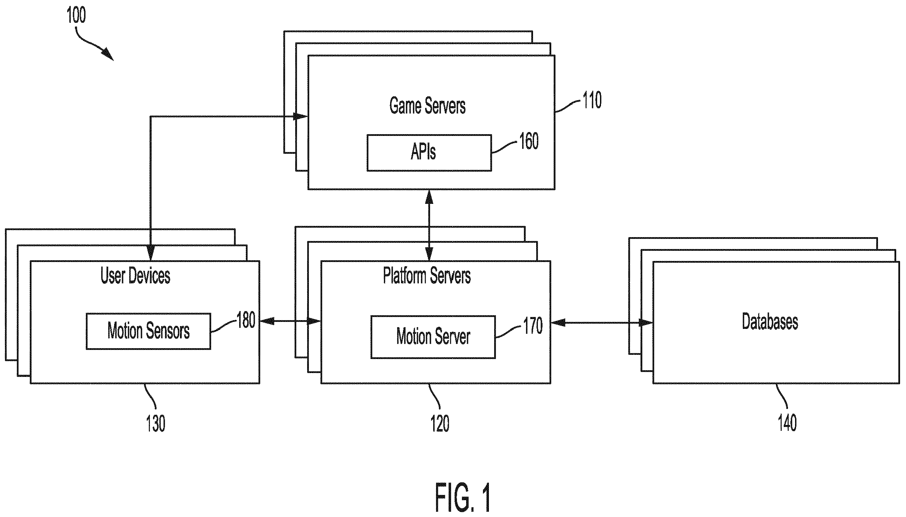

FIG. 1 illustrates an exemplary network environment 100 in which systems for utilizing parameters of real-world exercise as inputs for gameplay of interactive content titles may be implemented. The network environment 100 may include one or more game servers 110 that provide streaming content (*e.g*., interactive content titles, game titles, interactive video, podcasts, etc.), one or more platform servers 120, one or more user devices 130, and one or more databases 140. The component devices of FIG. 1 may communicate with each other via one or more communication networks (inclusive of the Internet).

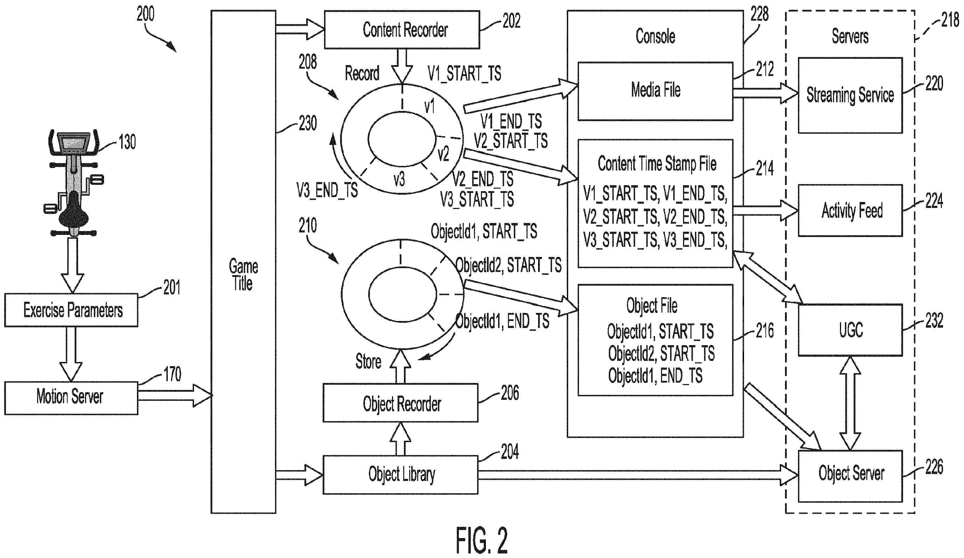

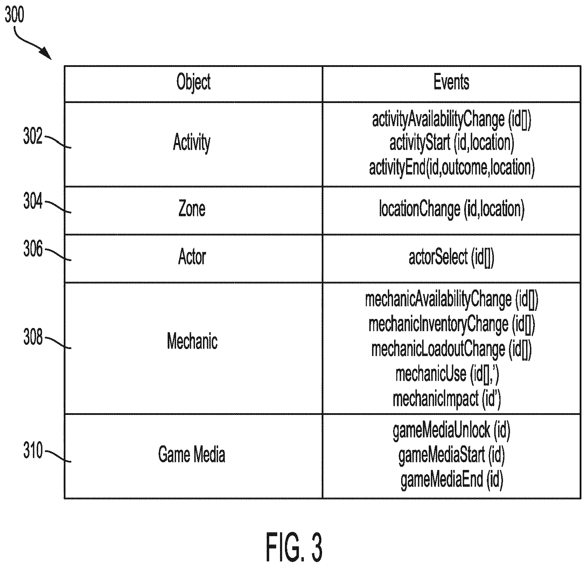

Game servers 110 may maintain, stream, and host interactive media available to stream on a user device 130 over a communication network. Such game servers 110 may be implemented in the cloud (*e.g*., one or more cloud servers). Each media may include one or more sets of object data that may be available for participation with (*e.g*., viewing or interacting with an activity) by a user. Data about the object shown in the media may be stored by the media streaming servers 110, platform servers 120 and/or the user device 130, in an object file 216 ("object file"), as will be discussed in detail with respect to FIGS. 2 and 3.

The platform servers 120 may be responsible for communicating with the different game servers 110, databases 140, and user devices 130. Such platform servers 120 may be implemented on one or more cloud servers. The streaming servers 110 may communicate with multiple platform servers 120, though the media streaming servers 110 may be implemented on one or more platform servers 120. The platform servers 120 may also carry out instructions, for example, receiving a user request from a user to stream streaming media (*i.e*., games, activities, video, podcasts, User Generated Content ("UGC"), publisher content, etc.). The platform servers 120 may further carry out instructions, for example, for streaming the streaming media content titles. Such streaming media may have at least one object set associated with at least a portion of the streaming media. Each set of object data may have data about an object (*e.g*., activity information, zone information, actor information, mechanic information, game media information, etc.) displayed during at least a portion of the streaming media.

The streaming media and the associated at least one set of object data may be provided through an application programming interface (API) 160, which allows various types of media streaming servers 110 to communicate with different platform servers 120 and different user devices 130. API 160 may be specific to the particular computer programming language, operating system, protocols, etc., of the media streaming servers 110 providing the streaming media content titles, the platform servers 120 providing the media and the associated at least one set of object data, and user devices 130 receiving the same. In a network environment 100 that includes multiple different types of media streaming servers 110 (or platform servers 120 or user devices 130), there may likewise be a corresponding number of APIs 160.

The user device 130 may include a plurality of different types of computing devices that may be associated with a user account of a user. For example, the user device 130 may include any number of different gaming consoles, mobile devices, laptops, desktops. The user device 130 may further include exercise or sports equipment, such as a stationary or standard bicycle, a rowing machine, a treadmill, weights rack, elliptical machine, cross-country ski machine, Pilates machine, etc. Such exercise or sports equipment may be configured to track certain metrics (*e.g*., speed, distance), and such metrics may be retrieved by motion server 170.

In some embodiments, the user device 130 may include or otherwise be associated with sensors or game controllers (*e.g*., hand-held, head-mounted, wearable) that are separate or integrated with the exercise or sports equipment. In another example, the sensors associated with user device 130 may be deployed and implemented in the cloud (e.g., one or more cloud servers associated with motion server 170). In some embodiments, the user device 130 may include motion sensors 180 that capture exercise parameters that measures or characterizes movement and exercise on the exercise or sports equipment. The user device 130 may further include biometric sensors such as heart-rate sensors, motion-capture sensors, or any other sensor that can be used to biometrically validate the exercise parameters.

The user device 130 may include or otherwise associated with one or more sensor devices including biometric sensors, a computing device including the biometric sensors, or a controller including biometric sensors. For example, the biometric sensors included on or associated with a controller may be capable of measuring electrodermal activity, or galvanic skin response and also record heart rate using the biometric sensors. The biometric sensors may measure and record any variety of biometric data known in the art, including but not limited to a daily readiness, hours of sleep, resting heart rate, heart rate variability, etc. The captured biometric data may further alter game or character parameters at the outset of a game, such as by altering a characteristic of character or game difficulty level to reflect the player's physical state. This may incentive players to reach biometric goals to be able to perform in a certain manner or state in an interactive content title.

The user device(s) 130 may also include or be associated with a variety of sensors and interfaces that capture information regarding physical movement or exercise by the user within a real-world environment and communicate such information to motion server 170. Associated cameras may capture image data of the real-world environment, microphones may capture sound, and sensors may capture sensor data regarding different parameters of detected movements by the user in the real-world environment. The captured data may be analyzed by motion server 170 to determine when certain benchmarks are reached. Motion server 170 may further identify that such benchmarks are associated with inputs for controlling an avatar in a virtual environment.

In exemplary embodiments, different sets of exercise modifications may be stored by motion server 140 in association with different types of exercise or sports equipment. As such, one set of exercise parameters associated with a stationary bicycle may be required to initiate input of a specific command, while a different set of exercise parameters associated with a treadmill may be required to initiate the same command. Different combinations of exercise parameters (*e.g*., speed, resistance, number of steps, number of jumps, heart rate, breathing rate) may be also defined as being associated with different inputs (*e.g*., associated with different actions, abilities, points, rewards, etc., within a virtual environment) for a specific game title. Using such stored modifications, motion server 170 therefore monitors the virtual environment from the corresponding combinations of exercise parameters and initiates the associated inputs when a specific combination of exercise parameters is detected.

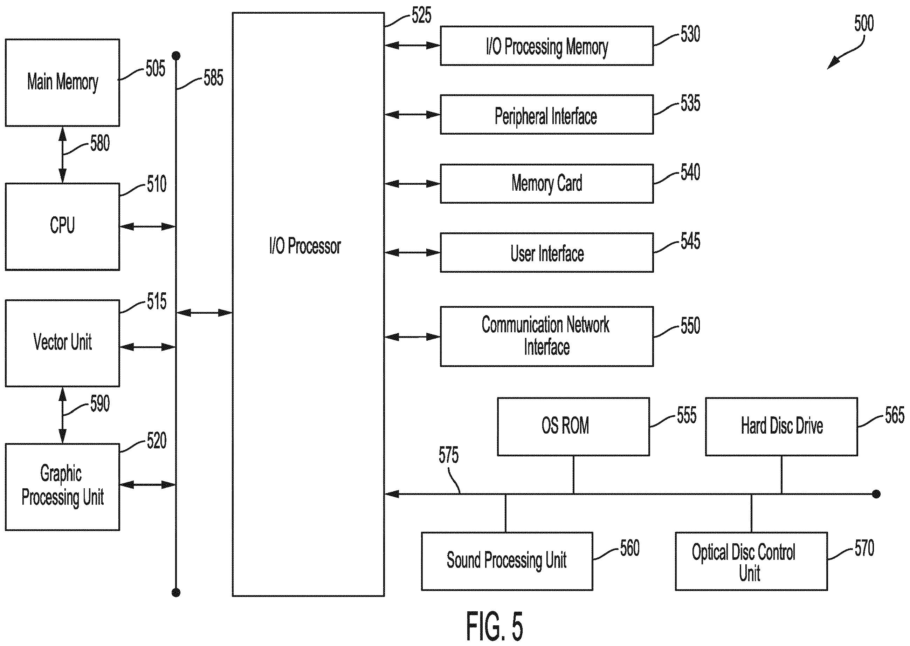

Such user device 130 may also be configured to access data from other storage media, such as, but not limited to memory cards or disk drives as may be appropriate in the case of downloaded services. Such devices 130 may include standard hardware computing components such as, but not limited to network and media interfaces, non-transitory computer-readable storage (memory), and processors for executing instructions that may be stored in memory. These user devices 130 may also run using a variety of different operating systems (e.g., iOS, Android), applications or computing languages (e.g., C++, JavaScript). An example user device 130 is described in detail herein with respect to FIG. 5.

The databases 140 may be stored on the platform server 120, the media streaming servers 110, any of the servers 218 (examples shown in FIG. 2), on the same server, on different servers, on a single server, across different servers, or on any of the user devices 130. Such databases 140 may store the streaming media and/or an associated set of object data. Such streaming media may depict one or more objects (*e.g*., activities) that a user can participate in and/or UGC (*e.g.*, screen shots, videos, commentary, mashups, etc.) created by peers, publishers of the media content titles and/or third party publishers. Such UGC may include metadata by which to search for such UGC. Such UGC may also include information about the media and/or peer. Such peer information may be derived from data gathered during peer interaction with an object of an interactive content title (*e.g*., a video game, interactive book, etc.) and may be "bound" to and stored with the UGC. Such binding enhances UGC as the UGC may deep link (*e.g*., directly launch) to an object, may provide for information about an object and/or a peer of the UGC, and/or may allow a user to interact with the UGC. One or more user profiles may also be stored in the databases 140. Each user profile may include information about the user (*e.g*., user progress in an activity and/or media content title, user id, user game avatars, etc.) and may be associated to media.

FIG. 2 is a block diagram of an exemplary system for utilizing parameters of real-world exercise as inputs for gameplay of interactive content titles. In the example network environment 200 of FIG. 2, an example user device 130 (*e.g*., an exercise bike), an example console 228 and example servers 218 (*e.g*., a streaming server 220, an activity feed server 224, a UGC server 232, and an object server 226) are shown.

The user device 130 may send exercise parameters 201 in real-time over a communication network to a motion server 170. The exercise parameters 201 may include power data, resistance data, cadence data, speed data, or any kind of output data associated movement or exercise. The exercise parameters 201 may be mapped to a set of inputs associated with gameplay of the game title 230 by the motion server 170. The motion server 170 may then send the set of inputs to the game title 230. Within the exercise parameters 201, the different types of data may be mapped with one another and associated timestamps to generate a set of variables that may be mapped to a set of inputs associated with gameplay of the game title 230. The set of inputs may further be mapped to various object files 216, described in more detail with respect to FIG. 3. Such mapping may be used to generate instructions for a game server 110 associated with the game title 230 such that execution of the instructions may initiate performance of an in-game action by an avatar within the gaming environment of the game title 230.

The console 228 may be implemented on the platform server 120, a cloud server, or on any of the servers 218. The console 228 may further includes a content recorder 202 and an object recorder 210, described in more detail below, where content (*e.g*., media) may be recorded and outputted through the console 228. The game titles 230 may be executed on the console 228. Alternatively, or in addition to, the content recorder 202 may be implemented on the platform server 120, a cloud server, or on any of the servers 218.

Such content recorder 202 may receive and record content (*e.g*., media) from an interactive content title 230 (*e.g*., game servers 110) onto a content ring-buffer 208. Such ring-buffer 208 may store multiple content segments (*e.g*., v1, v2 and v3), start times for each segment (*e.g*., V1_START_TS, V2_START_TS, V3_START_TS), and end times for each segment (*e.g*., V1_END_TS, V2_END_TS, V3_END_TS). Such segments may be stored as a media file 212 (*e.g*., MP4, WebM, etc.) by the console 228. Such media file 212 (*e.g.*, a portion of the streaming media) may be uploaded to the streaming server 220 for storage and subsequent streaming or use, though the media file 212 may be stored on any server, a cloud server, any console 228, or any user device 130. The media file 212 may be uploaded periodically and/or in real-time or close to real-time. Such start times and end times for each segment may be stored as a content time stamp file 214 by the console 228. Such content time stamp file 214 may also include a streaming ID, which matches a streaming ID of the media file 212, thereby associating the content time stamp file 214 to the media file 212. Such content time stamp file 214 may be uploaded and stored to the activity feed server 224 and/or the UGC server 232, though the content time stamp file 214 may be stored on any server, a cloud server, any console 228, or any user device 130.

Concurrent to the content recorder 202 receiving and recording content from the interactive content title 230, an object library 204 receives object data from the interactive content title 230, and an object recorder 206 tracks the object data to determine when an object beings and ends. Such object data may be uploaded periodically and/or in real-time or close to real-time. The object library 204 and the object recorder 206 may be implemented on the platform server 120, a cloud server, or on any of the servers 218. When the object recorder 206 detects an object beginning, the object recorder 206 receives object data (*e.g*., user interaction with the object, object ID, object start times, object end times, object results, object types, etc.) from the object library 204 and records the object data onto an object ring-buffer 208 (*e.g*., ObjectID1, START_TS; ObjectlD2, START_TS; ObjectlD3, START_TS). Such object data recorded onto the object ring-buffer 208 may be stored in an object file 216.

Such object file 216 may also include object start times, object end times, an object ID, object results, object types (*e.g.*, competitive match, quest, task, etc.), user or peer data related to the object. For example, an object file 216 may store data regarding an activity, an in-game item, a zone, an actor, a mechanic, a game media, as will be discussed in detail with respect to FIG. 3. Such object file 216 may be stored on the object server 226, though the object file 216 may be stored on any server, a cloud server, any console 228, or any user device 130.

Such object data (*e.g*., the object file 216) may be associated with the content data (*e.g.*, the media file 212 and/or the content time stamp file 214). In one example, the object server 226 stores and associates the content time stamp file 214 with the object file 216 based on a match between the streaming ID of the content time stamp file 214 and a corresponding activity ID of the object file 216. In another example, the object server 226 may store the object file 216 and may receive a query from the UGC server 232 for the object file 216. Such query may be executed by searching for an activity ID of the object file 216 that matches a streaming ID of a content time stamp file 214 transmitted with the query. In yet another example, a query of stored content time stamp files 214 may be executed by matching a start time and end time of a content time stamp file 214 with a start time and end time of a corresponding object file 216 transmitted with the query. Such object file 216 may also be associated with the matched content time stamp file 214 by the UGC server 232, though the association may be performed by any server, a cloud server, any console 228, or any user device 130. In another example, an object file 216 and a content time stamp file 214 may be associated by the console 228 during creation of each file 214, 216.

In exemplary implementations, a user may use one or more user device(s) 130 during gameplay. Each user device 130 may be associated with different types of controllers and inputs for signifying different commands in different game titles. Game modifications may further support incorporation of different types of exercise or sports equipment as controllers for gameplay as well. Depending on the capabilities of the existing exercise or sports equipment, different types of exercise data may be retrieved or otherwise monitored during gameplay. During an exemplary gameplay session, for example, the user of the user device 130 (*e.g*., exercise bicycle of FIG. 3) may be cycling at different speeds, resistances, exhibiting different heart and breathing rates, other parameters, etc. Such exercise parameters 201 may be tracked by the user device 130 itself or tracked by other sensors located in the real-world environment of the user, including sensors worn, held, mounted, or otherwise located within range of the user.

The exercise parameters 201 may then be provided to motion server 170 for analysis in context with data regarding the current game session. As discussed above, information regarding the current game session may be captured in media files and activity files generated by UDS 200. Such media and activity files may be provided or accessed by motion server 140 for use in analyzing, filtering, and matching sensor data regarding real-world exercise to inputs associated with initiating actions within the virtual environment. For example, an activity file may include gameplay data regarding a specific gameplay session of a specific game title with a specific peer player that is performs one or more in-game actions. The motion server 140 may use the data from the activity file to identify the game title, peer player, in-game actions being performed, and other conditions of the virtual environment. Such identified conditions may be used by motion server 140 to filter search results for the available the input commands associated with the exercise parameters 230.

FIG. 3 is an exemplary table of various objects and associated virtual events. As illustrated, such object data (*e.g*., the object file 216) may be associated with event information regarding activity availability change and may be related to other objects with associated object information. Mediaobject bindings may form telemetry between the objects shown in at least a portion of the streaming media and the streaming media. For example, such object data may be activity data 302, zone data 304, actor data 306, mechanics data 308, game media data 310, and other gameplay-related data.

Such object data (*e.g*., the object file 216) may be categorized as in in progress, openended, or competitive. Such activity data 302 may include optional properties, such as a longer description of the activity, an image associated with the activity, if the activity is available to players before launching the game, whether completion of the activity is required to complete the game, whether the activity can be played repeatedly in the game, and whether there are nested tasks or associated child activities. Such activity data 302 may include an activity availability change event for, which may indicate a list or array of currently available activities for the player. For example, this may be used to decide what activities to display in a game plan.

Such zone data 304 may indicate an area of an associated game world with a single coordinate system wherein the zone may have a 2-D map associated with it and may be used to display locations on the zone. If zone data 304 are applicable, each zone may include a zone ID and a short localizable name of the Zone. Such zone data 304 may be associated with a view projection matrix (4x4) to convert from 3-D world coordinates to a 2-D map position. Such zone data 304 may be associated with a location change event that indicates an update to a current in-game location of the player. Such location change event may be posted regularly, or whenever the player's in-game location changes significantly. The platform server 120 may store a latest value in 'state.' Such zone data 304 may include an x, y, z position of the player's avatar in the zone as well as an a, b, c vector indicating the player's avatars orientation or direction. Such zone data 304 may be associate with an activity start event and/or an activity end event and for the activity end event, an outcome of completed, failed, or abandoned may be associated to the activity (*e.g*., activity ID).

Such actor data 306 may be associated with an entity with behaviors in the game and can be player-controller or game-controlled, and can change dynamically during gameplay. Such actor data 306 may include an actor ID for the actor, a localizable name for the actor, an image of the actor, and/or a short description of the actor. Such actor data 306 may be associated with an actor select event that indicates that the player's selected actor(s) have changed. The selected actor(s) may represent the actors the player is controlling in the game and may be displayed on the player's profile and other spaces via the platform server 120. There may be more than one actor selected at time and each game may replace its list of actors upon loading save data.

Such mechanics data 308 may be associated with an item, skill, or effect that can be used by the player or the game to impact gameplay (*e.g*., bow, arrow, stealth attack, fire damage) and may exclude items that do no impact gameplay (*e.g*., collectibles). Such mechanics data 308 may include a mechanic ID of the mechanic, a short name of the mechanic, an image of the mechanic, and/or a short description of the mechanic. Such mechanics data 308 may be associated with a mechanic availability change event that indicates that the mechanics available to the player have changed. Available may mean that the mechanic is available in the game world for the player to use, but may require the player to go through some steps to acquire it into inventory (*e.g.*, buy from a shop, pick up from the world) before using it. Each game may replace its list of mechanics upon loading save data.

Such mechanics data 308 may be associated with a mechanic inventory change event that indicates that the player's inventory has changed. Inventory may refer to mechanics that are immediately usable to the player without having to take additional steps in the game before using it. Inventory information is used to estimate a player's readiness for various activities, which may be forwarded to the platform server 120. Games may replace its list of mechanic inventory upon loading save data. Mechanics on cool down may be considered part of the inventory. Mechanic counts (e.g., ammunition, healing points) with any non-zero value may be treated as "in inventory." Inventory mechanics may be considered a subset of available mechanics.

Such mechanics data 308 may be associated with a mechanic use event that indicates that a mechanic has been used by or against the player and may be used to be displayed as mechanic usage in a UGC context. Such mechanics data 308 may include a list or array of mechanics that were used (*e.g*., fire arrow, fire damage) or whether an initiator is the player, such that whether the mechanics were used by or against the player. Such mechanics data 308 may include an initiator actor ID, a current zone ID of the initiator actor, and/or a current x, y, z position of the initiator actor. Such mechanics data 308 may be associated with a mechanic impact event that indicates that a mechanic had impact on gameplay (*e.g*., an arrow hit an enemy) and may be used to display mechanic image in a UGC context. Mechanic use and mechanic image events may be not linked. Such mechanics data 308 may include the initiator action ID, the current zone ID of the initiator actor, the current x, y, z position of the initiator actor, a target actor ID, a current zone ID of the target actor, a current x, y, z of the target actor, and a mitigation mechanic that may mitigate the initiator mechanic.

Such game media data 310 may be include a game media ID of the game media, a localizable name for the game media, a media format (*e.g*., image, audio, video, text, etc.), a category or type of media (cut-scene, audiolog, poster, developer commentary, etc.), a URL or a serverprovisioned media file, and/or whether the game media is associated with a particular activity. Such game media data 310 may be associated with a game media start event that indicates that a particular piece of game media has started in the game right now and a game media end event that indicates that the particular piece of game media has ended.

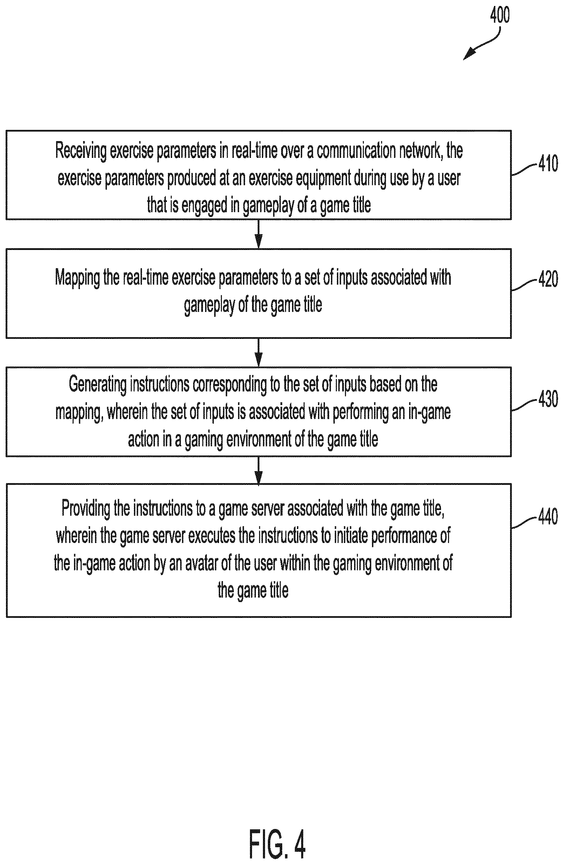

FIG. 4 illustrates a flowchart of an exemplary method 400 for utilizing parameters of real-world exercise as inputs for gameplay of interactive content titles. Although the example method 400 depicts a particular sequence of operations, the sequence may be altered without departing from the scope of the present disclosure. For example, some of the operations depicted may be performed in parallel or in a different sequence that does not materially affect the function of the method 400. In other examples, different components of an example device or system that implements the method 400 may perform functions at substantially the same time or in a specific sequence.

According to some examples, the method includes receiving exercise parameters in real-time over a communication network, the exercise parameters produced at an exercise equipment during use by a user that is engaged in gameplay of a game title at block 410. For example, the motion server 170 illustrated in FIGs. 1 and 2 may receive exercise parameters in real-time over a communication network, the exercise parameters produced at an exercise equipment during use by a user that is engaged in gameplay of a game title. In some examples, a controller device is coupled to or integrated with an exercise equipment providing the exercise parameters associated with motion. In some examples, the game title is a competition-based game and an character's movements are mirroring movements performed by the user at the exercise equipment. In some examples, the exercise data optionally controls a character in the gaming environment. In some examples, the exercise data contributes to in-game achievements and scores without a requirement of the exercise data during the gameplay. In some examples, movement of a character in the game title that is dependent on the exercise data by a user is different from movements by the user on the exercise equipment. In such situations, the achievement of the exercise parameters may generate audio-visual effects within the display of the game environment, but may not necessarily affect scoring, rank, etc.

In another example of the receiving exercise parameters at block 410, the method comprises mapping the power data to the resistance data and the associated timestamps. For example, the motion server 170 illustrated in FIGS. 1 and 2 may map the power data to the resistance data and the associated timestamps. In some examples, the exercise parameters include at least one of power data, resistance data, and associated timestamps and further comprising.

According to some examples, the method includes mapping the real-time exercise parameters to a set of inputs associated with gameplay of the game title at block 420. For example, the motion server 170 illustrated in FIGS. 1 and 2 may map the real-time exercise parameters to a set of inputs associated with gameplay of the game title.

According to some examples, the method includes generating instructions corresponding to the set of inputs based on the mapping at block 430. For example, the motion server 170 illustrated in FIGS. 1 and 2 may generate instructions corresponding to the set of inputs based on the mapping. In some examples, the set of inputs is associated with performing an in-game action in a gaming environment of the game title.

According to some examples, the method includes providing the instructions to a game server associated with the game title at block 440. For example, the motion server 170 illustrated in FIGS. 1 and 2 may provide the instructions to a game server associated with the game title. In some examples, the game server executes the instructions to initiate performance of the in-game action by an avatar of the user within the gaming environment of the game title.

According to some examples, the method includes biometrically validating the exercise data with biometric sensors. For example, the motion server 170 illustrated in FIGS. 1 and 2 may biometrically validate the exercise data with biometric sensors.

According to some examples, the method includes calibrating movement of a character by results of the biometrical validation to more accurately represent the exercise data within the gameplay. For example, the motion server 170 illustrated in FIGS. 1 and 2 may calibrate movement of a character by results of the biometrical validation to more accurately represent the exercise data within the gameplay.

According to some examples, the method includes adjusting game requirements to require certain inputs based on the exercise data. For example, the motion server 170 illustrated in FIGs. 1 and 2 may adjust game requirements to require different thresholds of exercise parameters captured for a user over time. For example, as a user gets into better shape over time, the same set of exercise parameters may become easier to achieve. Motion server 140-whether automatically or upon recommendation and approval-may require more challenging parameters to be achieved before the corresponding in-game inputs may be initiated. The historical data captured regarding a user over time may be analyzed using artificial intelligence, machine learning, and pattern recognition techniques to identify different stages of fitness based on trends in the exercise parameters. As the user improves in fitness level, motion server 140 may identify (and generate a recommendation) that the time has come to adjust exercise parameters so as to continue to challenge the user.

FIG. 5 is an example user electronic entertainment system that may be used in launching interactive content and providing dynamic interfaces, according to an aspect of the present disclosure. The entertainment system 500 of FIG. 5 includes a main memory 505, a central processing unit (CPU) 510, vector unit 515, a graphics processing unit 520, an input/output (I/O) processor 525, an I/O processor memory 530, a peripheral interface 535, a memory card 540, a Universal Serial Bus (USB) interface 545, and a communication network interface 550. The entertainment system 500 further includes an operating system read-only memory (OS ROM) 555, a sound processing unit 560, an optical disc control unit 570, and a hard disc drive 565, which are connected via a bus 575 to the I/O processor 525.

Entertainment system 500 may be an electronic game console. Alternatively, the entertainment system 500 may be implemented as a general-purpose computer, a set-top box, a hand-held game device, a tablet computing device, a virtual reality device, an augmented reality device, or a mobile computing device or phone. Entertainment systems may contain more or less operating components depending on a particular form factor, purpose, or design.

The CPU 510, the vector unit 515, the graphics processing unit 520, and the I/O processor 525 of FIG. 5 communicate via a system bus 585. Further, the CPU 510 of FIG. 5 communicates with the main memory 505 via a dedicated bus 580, while the vector unit 515 and the graphics processing unit 520 may communicate through a dedicated bus 590. The CPU 510 of FIG. 5 executes programs stored in the OS ROM 555 and the main memory 505. The main memory 505 of FIG. 5 may contain pre-stored programs and programs transferred through the I/O Processor 525 from a CD-ROM, DVD-ROM, or other optical disc (not shown) using the optical disc control unit 570. I/O Processor 525 of FIG. 5 may also allow for the introduction of content transferred over a wireless or other communications network (*e.g*., 4G, LTE, 1G, and so forth). The I/O processor 525 of FIG. 5 primarily controls data exchanges between the various devices of the entertainment system 500 including the CPU 510, the vector unit 515, the graphics processing unit 520, and the peripheral interface 535.

The graphics processing unit 520 of FIG. 5 executes graphics instructions received from the CPU 510 and the vector unit 515 to produce images for display on a display device (not shown). For example, the vector unit 515 of FIG. 5 may transform objects from three-dimensional coordinates to two-dimensional coordinates and send the two-dimensional coordinates to the graphics processing unit 520. Furthermore, the sound processing unit 560 executes instructions to produce sound signals that are outputted to an audio device such as speakers (not shown). Other devices may be connected to the entertainment system 500 via the USB interface 545, and the communication network interface 550 such as wireless transceivers, which may also be embedded in the system 500 or as a part of some other component such as a processor.

A user of the entertainment system 500 of FIG. 5 provides instructions via the peripheral interface 535 to the CPU 510, which allows for use of a variety of different available peripheral devices (*e.g*., controllers) known in the art. For example, the user may instruct the CPU 510 to store certain game information on the memory card 540 or other non-transitory computer-readable storage media or instruct an avatar in a game to perform some specified action.

The present disclosure pertains to an application that may be operable by a variety of end user devices. For example, an end user device may be a personal computer, a home entertainment system (*e.g*., Sony PlayStation2^{®} or Sony PlayStation3^{®} or Sony PlayStation4^{®} or Sony PlayStation5^{®}), a portable gaming device (*e.g*., Sony PSP^{®} or Sony Vita^{®}), or a home entertainment system of a different albeit inferior manufacturer. The present methodologies described herein are fully intended to be operable on a variety of devices. Aspects of the present disclosure may also be implemented with cross-title neutrality and/or may be utilized across a variety of titles from various publishers.

Aspects of the present disclosure may be implemented in an application that may be operable using a variety of devices. Non-transitory computer-readable storage media refer to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, a floppy disk, a flexible disk, a hard disk, magnetic tape, any other magnetic medium, a CD-ROM disk, digital video disk (DVD), any other optical medium, RAM, PROM, EPROM, a FLASHEPROM, and any other memory chip or cartridge.

Various forms of transmission media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU. Various forms of storage may likewise be implemented as well as other network interfaces and network topologies to implement the same.

In some aspects of the present disclosure, computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

The foregoing detailed description of the technology has been presented for purposes of illustration and description. It is not intended to be exhaustive or to limit the technology to the precise form disclosed. Many modifications and variations are possible in light of the above teaching. The described aspects of the present disclosure were chosen in order to adequately explain the principles of the technology, its practical application, and to enable others skilled in the art to utilize the technology along with various modifications as are suited to the particular use contemplated. It is intended that the scope of the technology be defined by the claim.

## Claims

1. A method of converting exercise parameters into game inputs, the method comprising:
receiving exercise parameters in real-time over a communication network, the exercise parameters produced during use of a real-world exercise equipment by a user that is engaged in gameplay of a game title;
mapping the exercise parameters to a set of inputs associated with gameplay of the game title;
generating instructions corresponding to the set of inputs based on the mapping, wherein the set of inputs is associated with performing an in-game action in a gaming environment of the game title; and
providing the instructions to a game server associated with the game title, wherein the game server executes the instructions to initiate performance of the in-game action associated with an avatar of the user within the gaming environment of the game title.

2. The method of claim 1, further comprising:
storing a map in memory that associates a plurality of different sets of exercise parameters with a corresponding set of inputs; and
monitoring the exercise parameters based on the stored map.

3. The method of claim 2, wherein the map is stored among a plurality of stored maps, each map specific to at least one of a game title, set of game titles, game genre, game developer, game console, game controller, set of controller modifications, game environment, avatar, and in-game activity

4. The method of claim 1, wherein the exercise parameters are captured by at least one of a camera, sensor, and controller device located in a real-world environment of the exercise equipment.

5. The method of claim 1, wherein the exercise parameters further include associated biometric data, and further comprising validating the identified set of inputs based on the biometric data.

6. The method of claim 5, further comprising calibrating the in-game action of the avatar based on the validation.

7. The method of claim 1, wherein the in-game action by the avatar mirrors one or more real-world movements associated with the exercise parameters.

8. The method of claim 1, further comprising adjusting one or more thresholds associated with the exercise parameters.

9. The method of claim 1, wherein the in-game action is associated with one or more audio-visual effects in the virtual environment.

10. A system of converting exercise parameters into game inputs, the system comprising:
a communication interface that receives exercise parameters in real-time over a communication network, the exercise parameters produced during use of a real-world exercise equipment by a user that is engaged in gameplay of a game title; and
a processor that executes instructions stored in memory, wherein the processor executes the instructions to:
map the exercise parameters to a set of inputs associated with gameplay of the game title,
generates instructions corresponding to the set of inputs based on the mapping,
wherein the set of inputs is associated with performing an in-game action in a gaming environment of the game title; and
wherein the communication interface provides the instructions to a game server associated with the game title, wherein the game server executes the instructions to initiate performance of the in-game action associated with an avatar of the user within the gaming environment of the game title.

11. The system of claim 10, further comprising memory that stores a map in memory that associates a plurality of different sets of exercise parameters with a corresponding set of inputs; and wherein the processor monitors the exercise parameters based on the stored map.

12. The system of claim 11, wherein the map is stored among a plurality of stored maps, each map specific to at least one of a game title, set of game titles, game genre, game developer, game console, game controller, set of controller modifications, game environment, avatar, and in-game activity.

13. The system of claim 10, wherein the exercise parameters are captured by at least one of a camera, sensor, and controller device located in a real-world environment of the exercise equipment.

14. The system of claim 10, wherein the exercise parameters further include associated biometric data, and wherein the processor executes further instructions to validate the identified set of inputs based on the biometric data.

15. A non-transitory computer-readable storage medium having embodied thereon instructions executable by a processor to perform method of converting exercise parameters into game inputs, the method comprising:
receiving exercise parameters in real-time over a communication network, the exercise parameters produced during use of a real-world exercise equipment by a user that is engaged in gameplay of a game title;
mapping the exercise parameters to a set of inputs associated with gameplay of the game title;
generating instructions corresponding to the set of inputs based on the mapping, wherein the set of inputs is associated with performing an in-game action in a gaming environment of the game title; and
providing the instructions to a game server associated with the game title, wherein the game server executes the instructions to initiate performance of the in-game action associated with an avatar of the user within the gaming environment of the game title.
